# EUROPÄISCHE PATENTSCHRIFT

(11) **EP 1 079 354 B1**
(45) Veröffentlichungstag und Bekanntmachung des Hinweises auf die Patenterteilung: **27.09.2006**
(21) Anmeldenummer: 00117614.8
(22) Anmeldetag: 16.08.2000
(51) Int. Cl.: G08G 1/09

(54) **Verfahren zum Abrufen von Informationen aus einem Informationsnetzwerk**
Method to call information from an information network
Procédé de demande d'information d'un réseau d'information

(30) Priorität: 20.08.1999 DE 19939625
(43) Veröffentlichungstag der Anmeldung: 28.02.2001
(73) Patentinhaber: Nokia Corporation, 02150 Espoo (FI)
(72) Erfinder: Hoyler, Stefan, 44866 Bochum (DE); Nemeth, Zoltan, 44879 Bochum (DE); Imam, Amir, 44801 Bochum (DE); Angel, Jörn, 44801 Bochum (DE)
(74) Vertreter: Becker Kurig Straus

(56) Entgegenhaltungen:
- EP-A- 0 887 782
- DE-A- 19 651 143
- DE-A- 19 651 788
- US-A- 5 131 020
- US-A- 5 864 846
- GNEITING S: "WAP-ANGEBOTE PER HANDY" FUNKSCHAU, FRANZIS-VERLAG K.G. MUNCHEN, DE, Bd. 72, Nr. 8, 1. April 1999 (1999-04-01), Seiten 28-32, XP000896767 ISSN: 0016-2841

## Beschreibung

### Technisches Gebiet

Die vorliegende Erfindung betrifft ein Verfahren zum Abrufen von Informationen aus einem Informationsnetzwerk.

### Stand der Technik

In der heutigen Informationsgesellschaft kann ein Nutzer auf eine Vielzahl von Informationen zugreifen. Als Beispiel sei hier das Internet genannt. Der Zugang zum Internet ist beispielsweise durch Personal Computer (PC) möglich, die mit einem Internet-Server verbunden sind, oder auch direkt über ein Mobiltelefon entsprechend dem sogenannten WAP-Standard (Wireless Application Protocol). Entsprechend dem WAP Standard stellt ein Mobiltelefon einen Kontakt zu einem WAP-Server (WAP-Gateway) her, der seinerseits direkt mit dem Internet verbunden ist.

Sowohl beim Zugang zum Internet über einen PC als auch über ein Mobiltelefon sind die Internet-Server durch einen Uniform Resource Locator URL zu adressieren. Nach Übermittlung der URL an einen Internet-Server wird die Verbindung zu dem Server im Internet hergestellt, der die für den Nutzer benötigten Informationen enthält. Diese Informationen können beispielsweise Produkte und Preise eines Unternehmens, touristische Attraktionen einer Stadt oder einer Region oder auch aktuelle Verkehrsinformationen sein, wie sie von lokalen Radio- und Fernsehsendern und Automobilclubs auf ihren Internet-Servern, zum Teil kostenfrei, zur Verfügung gestellt werden.

Beim Abrufen von Verkehrsinformationen stellt sich für den Nutzer das Problem, daß er oft nicht nur innerhalb des Versorgungsbereiches eines Radio- und Fernsehsenders mit seinem Fahrzeug unterwegs ist, sondern Verkehrsinformationen über einen längeren Streckenverlauf, der sich über den Versorgungsbereich mehrer Radio- und Fernsehstationen erstreckt, benötigt. Der Nutzer hat nun die Möglichkeit, die Internet-Seiten verschiedener Anbieter von Verkehrsinformationen aufzurufen und die Informationen für seinen geplanten Streckenverlauf zu sammeln. Da das Aufrufen von Internet-Seiten relativ langwierig sein kann, insbesondere zur Tageszeit, wenn das Datenaufkommen im Internet besonders hoch ist, wird der Nutzer unter Umständen davon absehen, überhaupt diese langwierige Abfrage zu starten.

Im Stand der Technik sind Dienste bekannt, die einem Anfragenden die Arbeit des Aufsuchens der Informationen abnehmen können. Möchte der Nutzer beispielsweise Verkehrsmeldungen für die Autobahn A1 haben, weil er von Köln nach Dortmund fährt, kann er diese Anfrage an einen Diensteanbieter schicken, der die Informationen dann an Ihn übermittelt. Die Informationen der Diensteanbieter beruhen in der Regel auf Informationen von sogenannten Staumeldern und Angaben der Polizei sowie u.U. eigenen Fahrbahnüberwachungseinrichtungen. Letztendlich stammen die Informationen aber nur aus einer Datenquelle, nämlich der des Diensteanbieters.

So ein Verfahren ist beispielsweise aus der Patentanmeldung WO 98/38618 bekannt. Bei diesem Verfahren richtet der Nutzer eine Anfrage zur aktuellen Verkerhslage an einen Diensteanbieter, der diese Anfrage zunächst registriert und dem Anfragenden dann einen Bezugscode mitteilt, mit dem der Anfragende später, wenn der Diensteanbieter die Informationen zusammengestellt hat, die benötigten Informationen abrufen kann.

Nachteilig ist bei dem in dieser Schrift vorgestellten Verfahren, daß auch hier eine längere Zeit vergeht, bis der Diensteanbieter die angefragten Informationen zusammengestellt hat. Erst nachdem der Diensteanbieter die Informationen für den Nutzer zusammengestellt hat, teilt er dem Anfragenden mit, daß dieser nun unter Angabe des Bezugscodes seine Informationen abrufen kann. Zudem muß der Nutzer nach diesem Verfahren den Dienstanbieter zweimal kontaktieren.

Auch die Verwendung von sogenannten Suchmaschinen, wie sie dem Nutzer im Internet unter den Namen Yahoo, Alta Vista usw. geläufig sind, helfen ihm nicht unbedingt weiter. Gibt er z.B. in einer Suchmaschine den Begriff

"Verkehrsinformationen" ein, werden ihm die Suchmaschinen unter Umständen zwar Internetserver nennen, auf denen er Verkehrsinformationen abrufen kann, die eigentliche Arbeit aber, nämlich die Internetserver mit einer URL aufzurufen und sich die gewünschten Informationen dann dort zu suchen, wird ihm durch die Suchmaschinen nicht abgenommen.

Die EP 0 887 782 A2 betrifft ein Fernabfragesystem zur Bereitstellung von Informationen über Verkehrsverhältnisse auf Schnellstraßen.

Dieses bekannte Ferabfragesystem umfasst ein Eingangselement auf das telefonisch durch Wahl einer bestimmten Rufnummer zugegriffen werden kann um einerseits über einen Meldekanal Informationen an das Fernabfragesystem zu übergeben oder um über einen Abfragekanal Informationen telefonisch oder via Internet anzufordern. Ein Ausgangselement ist vorgesehen, um dem Benutzer Verkehrsmeldungen und/oder Bedienungsanweisungen mitzuteilen.

Das Kernstück des bekannten Fernabfragesystems ist eine einzelne Datenbank, in der Informationen über Verkehrsverhältnisse abgelegt werden. Die in der Datenbank gespeicherten Daten sind hauptsächlich Verkehrsinformationen die von Privatbenutzern über einen Meldekanal telefonisch übermittelt wurden. Es werden aber auch offizielle polizeiliche Informationen zur Verkehrslage in die Datenbank einbezogen werden.

Will ein Benutzer aus der Datenbank des bekannten Fernabfragesystems Verkehrsinformationen erhalten, so sendet er mittels Telefon eine Anfrage an die Datenbank des Fernabfragesystems die Informationen zur Identifizierung der interessierenden Strecke enthalten. Ist die Strecke identifiziert, so werden dazu vorliegende Verkehrsmeldungen in der Datenbank des Fernabfragesystems herausgesucht und an den Benutzer übermittelt und in der systemüblichen Darstellungsweise, akustisch oder visuell, präsentiert.

Die DE 196 51 788 A1 betrifft ein Verfahren zur Datenermittelung und Aufbereitung in Informationsnetzwerken, bei dem auf eine Benutzeranfrage hin eine Suchmaschine zu dieser Frage passende Datensätze aus einer Vielzahl von Datenquellen ermittelt und in einer einheitlichen Sprache aus den Datenquellen zur Suchmaschine herunterlädt. Die Datensätze werden dann auf Redundanz überprüft und zu in der selben Sprache dem Computer des Benutzers weitergeleitet.

Der Erfindung liegt die Aufgabe zugrunde, ein Verfahren zum Abfragen von Informationen, insbesondere von Verkehrsmeldungen aus einem Informationsnetzanzugeben, mit dem ein Nutzer schnell und einfach die jeweils gewünschten Informationen aus dem Informationsnetzwerk mit mehreren Datenquellen erlangen kann.

Ferner ist es Aufgabe der Erfindung eine Einrichtung anzugeben, mit der das oben beschriebene Verfahren in vorteilhafterweise ausgeführt werden kann.

Diese Aufgaben werden durch das Verfahren nach Anspruch 1 bzw. die Datenverarbeitungseinrichtung nach Anspruch 11 gelöst.

Erfindungsgemäß ist also vorgesehen, dass die Datenverarbeitungseinrichtung auf Anfrage von einer Abfrageeinrichtung nicht nur die gewünschten Informationen aus den einzelnen Datenquellen im Informationsnetzwerk auffindet und zur Weiterleitung an die Abfrageeinrichtung herunterlädt, sondern auch die von den Datenquellen erhaltenen Informationen, insbesondere die von verschiedenen Datenquellen stammenden Verkehrsmeldungen, in ein für alle Informationen, also insbesondere für alle Verkehrsmeldungen, einheitliches Format umwandelt. Dies hat den Vorteil, dass Informationen, die in verschiedenen Datenquellen in verschiedenen Formaten vorliegen, dem Benutzer in einheitlicherweise präsentiert werden können, sodass er/sie die ihm/ihr gelieferten Informationen in übersichtlicherweise vorzuliegen hat.

Nach einer ersten vorteilhaften Ausgestaltung der Erfindung durchsucht die Datenverarbeitungseinrichtung die von Datenquellen erhaltenen Informationen nach Schlüsselbegriffen und liest die dazugehörigen Informationen aus. Da die von den Datenquellen erhaltenen Informationen in der Regel auch nicht relevante

Informationen enthalten und die Informationen aus verschiedenen Datenquellen unterschiedlich strukturiert sein können, ist das Durchsuchen nach Schlüsselbegriffen und das Abspeichern der dazugehörigen Informationen besonders vorteilhaft.

Nach einer vorteilhaften Ausgestaltung der Erfindung durchsucht die Datenverarbeitungseinrichtung die von den Datenquellen erhaltenen bzw. in den Datenquellen aufgefundenen Informationen dann nach redundanten Informationen. Sollten redundante Informationen vorliegen, d.h. befinden sich in den Datenquellen die gleichen Informationen doppelt oder mehrfach, werden diese redundanten Informationen vor der weiteren Verarbeitung eliminiert.

Nach einer weiteren vorteilhaften Ausgestaltung der Erfindung filtert die Datenverarbeitungseinrichtung die in den Datenquellen aufgefunden Informationen entsprechend der Anfrage der Abfrageeinrichtung. D.h. wenn beim Abfragen der Datenquellen auch Informationen aufgefunden werden, die für die Abfrageeinrichung, bzw.den Nutzer der Abfrageeinrichtung nicht von Interesse sind, werden diese Informationen nicht weitergeleitet, sondern nur die Informationen, die auch angefragt wurden.

In einer weiteren vorteilhaften Ausführungsform der Erfindung durchsucht die Datenverarbeitungseinrichtung die Datenquellen in regelmäßigen Abständen nach relevanten Informationen und speichert die gefundenen Informationen in einer Zwischenspeichereinrichtung.

Wenn die Datenverarbeitungseinrichtung die Datenquellen immer erst dann durchsucht, sobald eine Anfrage von einer Abfrageeinrichtung eingegangen ist, dauert es in der Regel eine längere Zeit, bis alle Informationen empfangen und bearbeitet sind. Wenn nun die Datenverarbeitungseinrichtung in regelmäßigen Abständen die Datenbestände der Datenquellen durchsucht und die erhaltenen Informationen in einem Zwischenspeicher abspeichert, können diese Informationen der Abfrageeinrichtung wesentlich schneller zur Verfügung gestellt werden. Sobald die Datenverarbeitungseinrichtung eine Anfrage einer Abfrageeinrichtung erhält, liest die Datenverarbeitungseinrichtung die dort abgelegten Informationen aus der Zwischenspeichereinrichtung aus, filtert diese Informationen entsprechend der Anfrage und gibt sie an die Abfrageeinrichtung weiter.

Informationen, die beim Durchsuchen der Datenbestände der Datenquellen von der Datenverarbeitungseinrichtung in der Zwischenspeichereinrichtung gespeichert wurden, aber in den Datenbeständen der Datenquellen beim nächsten Durchsuchungsvorgang nicht mehr vorhandenen sind, werden aus der Zwischenspeichereinrichtung gelöscht. Durch diese Maßnahme wird vermieden, daß nicht mehr aktuelle Informationen auf der Zwischenspeichereinrichtung vorhanden sind und an die Abfrageeinrichtung weitergegeben werden.

Das erfinderische Verfahren kann besonders vorteilhaft für Informationsquellen im Internet angewendet werden. Die Datenquellen sind in diesem Fall im Internet Informationen anbietende Internet-Server.

Die Abfrageeinrichtung ist beispielsweise eine mobile Kommunikationseinrichtung die mittels des Wireless Application Protocol (WAP) mit der Datenverarbeitungseinrichtung kommuniziert und die abzurufenden Informationen sind beispielsweise Verkehrsinformationen.

Die Erfindung betrifft weiterhin eine Datenverarbeitungseinrichtung zum Abrufen und Durchsuchen von Datenquellen in einem Informationsnetzwerk, bei dem die Datenverarbeitungseinrichtung die in den Datenquellen des Informationsnetzwerkes aufgefundenen Informationen in einer Zwischenspeichereinrichtung abspeichert und auf Anfrage einer Abfrageeinrichtung die Informationen an die Abfrageeinrichtung weitergibt.

### Kurze Darstellung der Figuren

Es zeigen:
Fig. 1 den prinzipiellen Ablauf einer Anfrage an ein Informationsnetzwerk nach dem Stand der Technik
Fig. 2 den prinzipiellen Ablauf einer Anfrage an ein Informationsnetzwerk gemäß einer ersten Ausführungsform der Erfindung
Fig. 3 den prinzipiellen Ablauf einer Anfrage an ein Informationsnetzwerk gemäß einer zweiten Ausführungsform der Erfindung

### Wege zum Ausführen der Erfindung

Die Erfindung wird im folgenden anhand der Figuren näher erläutert.

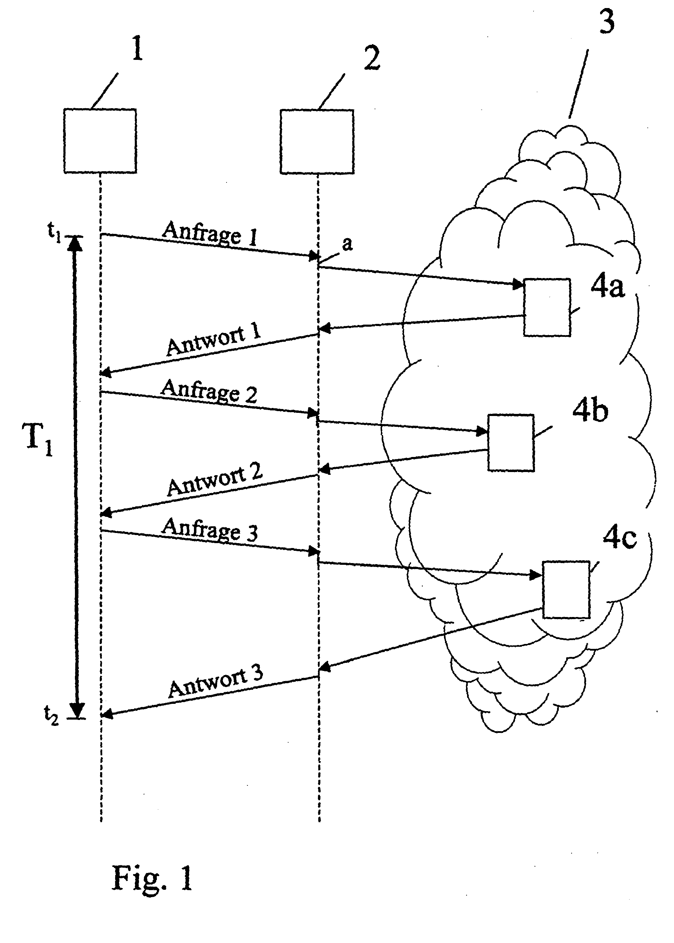

Fig. 1 zeigt den prinzipiellen Ablauf einer Anfrage an ein Informationsnetzwerk nach dem Stand der Technik. Dieser Stand der Technik wird im folgenden zunächst deshalb beschrieben, um Funktionsblöcke und Abläufe, die auch entsprechend der Erfindung notwendig sind, zu erläutern und um die Vorteile der Erfindung besser darstellen zu können.

In Figur 1 sind die Einrichtungen nach dem Stand der Technik angegeben, die demnach benötigt werden, um eine Informationsanfrage an ein Informationsnetzwerk vorzunehmen. Ferner gibt Fig.1 auch die zeitlichen Abläufe dieses Verfahrens an.

Block 1 steht stellvertretend für eine Abfrageeinrichtung. Diese Abfrageeinrichtung ist beispielsweise ein Personal-Computer oder ein tragbares oder ein in einem Fahrzeug fest installiertes Mobiltelefon. Auch Kombinationen dieser Einrichtungen sind denkbar. In der folgenden Beschreibung wird der Einfachheit halber von einem Mobiltelefon die Rede sein.

Der Nutzer verwendet das Mobiltelefon 1, um von dort eine Anfrage an ein Informationsnetzwerk 3 zu starten. Die Anfrage von dem Mobiltelefon 1 kann in Form einer Kurznachricht (SMS, Short Message Service) oder in irgendeiner anderen Form über den Daten- oder auch Sprachkanal eines zellularen Mobiltelefonnetzes verschickt werden.

Das Informationsnetzwerk 3 wird in diesem Beispiel durch das weltweit zugängliche Internet repräsentiert, welches in der weiteren Beschreibung der Einfachheit halber verwendet wird.

Es sind natürlich auch andere Informationsnetzwerke denkbar, beispielsweise innerhalb eines Unternehmens zugängliche Datennetze.

Im Internet 3 befindet sich eine große Anzahl von Internet-Servern, hier repräsentiert durch die Blöcke 4a, 4b, 4c, die für den Nutzer relevante Informationen bereithalten, weshalb diese auch als Datenquellen bezeichnet werden können.

Die Internet-Server (4a,4b,4c) enthalten beispielsweise Infomationen über Produkte und Preise von Unternehmen, touristische Attraktionen einer Stadt oder einer Region oder auch aktuelle Verkehrsinformationen, wie sie von lokalen Radio- und Fernsehsendern und Automobilclubs im Internet für den Nutzer, zum Teil kostenfrei, zur Verfügung gestellt werden.

Da der Nutzer seine Anfrage nicht direkt vom Mobiltelefon 1 an das Internet 3 schicken kann, dient die Datenverarbeitungseinrichtung 2 als Schnittstelle zum Internet. Diese Datenverarbeitungseinrichtung 2 ist beispielsweise ein WAP (Wireless Application Protocol) -Gateway, welches nach dem WWW-MMM (World Wide Web - Multi-Media-Mode) die Verbindungsstelle von mobilen Kommunikationseinrichtungen, wie z.B. ein Mobiltelefon 1, zum Internet 3 herstellt.

Eine der Aufgaben des WAP-Gateways besteht beispielsweise darin, eine mit einem Mobiltelefon erstellte Anfrage in ein für das Internet verständliches Format umzuwandeln. Andererseits kann das WAP-Gateway die Aufgabe übernehmen, im Internet vorhandene Informationen so umzuwandeln, daß sie auf dem relativ kleinen Display des Mobiltelefons 1 in für den Nutzer leicht verständlicher Form dargestellt werden.

Die Informationen in den Internet-Servern 4a,4b,4c liegen im HTML Format vor (HyperText Markup Language) vor und die Datenverarbeitungseinrichtung 2 wandelt diese Informationen in die WML (Wireless Markup Language) nach dem WAP Standard um.

Es sei nun angenommen, daß ein Nutzer auf der Autobahn A1 von Dortmund nach Hannover fahren möchte. Hierzu benötigt er Verkehrsinformationen, die von der Radio- und Fernsehstation WDR (Westdeutscher Rundfunk) für den Raum Nordrhein-Westfalen, dem Ausstrahlungsbereich des WDR, die beispielsweise auf dem Internet-Server 4a. bereitgestellt werden. In diesem Bereich befindet sich auch Dortmund. Ferner benötigt der Nutzer Verkehrsinformationen der Radio- und Fernsehstation NDR (Norddeutscher Rundfunk), dessen Internet Server 4b Verkehrsinformationen für den Norddeutschen Bereich bereithält, zu dem auch Hannover gehört.

Ferner möchte der Nutzer die Verkehrsinformationen eines Automobilclubs, bei dem er Mitglied ist, nutzen. Der Internet Server des Automobilclubs ist hier mit 4c gekennzeichnet.

Neben der unterschiedlichen regionalen Ausrichtung der Informationsquellen unterscheiden sich die Informationen in den Quellen u.U. in der Aktualität und der Genauigkeit.

Nach Fig. 1 richtet der Nutzer über sein Mobiltelefon 1 zunächst eine Anfrage zum Zeitpunkt t1 an die Datenverarbeitungseinrichtung 2. Die Abfrage enthält beispielsweise die Adresse (URL) des WDR Internet Servers 4a. Diese URL könnte lauten: "http://www.wdr.de/epg/verkehr/vkdocs/".

Die Datenverarbeitungseinrichtung 2 leitet die Adresse an das Internet weiter, womit die Verbindung zu dem Internet-Server 4a hergestellt wird. Die Datenverarbeitungseinrichtung findet nun eine HTML-Seite auf dem Internet-Server 4a vor, die einen Teil der vom Nutzer angefragten Verkehrsinformationen enthält. Die Datenverarbeitungseinrichtung 2 übernimmt diese HTML Seite und wandelt sie in eine WML Seite um.

In Form einer Antwortnachricht (Antwort 1) wird nun die WML Seite an das Mobiltelefon weitergeben, auf dessen Anzeigeeinrichtung der Nutzer jetzt die Verkehrsinformationen des WDR lesen kann. Diese könnten folgendermaßen aussehen:

| |
|---|
| [A1] Münster Richtung Osnabrück zwischen Lengerich/Tecklenburg und Kreuz Lotte/Osnabrück Baustelle, 4 km |
| [A1] Dortmund Richtung Leverkusen zwischen Wuppertal-Ronsdorf und Remscheid 2 km |
| [A2] Dortmund Richtung Oberhausen zwischen Kreuz Recklinghausen und Essen/Gladbeck, Bergungsarbeiten, 8 km |
| [A4] Köln Richtung Heerlen/Aachen zwischen Düren und Weisweiler Baustelle, 8 km |
| [A40] Duisburg Richtung Essen zwischen Mülheim-Winkhausen und Mülheim-Heimaterde 2 km |

Bei der Darstellung im HTML-Format auf dem Bildschirm eine Computers wäre es beispielsweise möglich, durch Anklicken der Zeichen in den Klammern eine Grafik zu erhalten, in der der Nutzer die Position der Staumeldungen ersehen kann. Da diese Form der graphischen Anzeige auf dem Display eines Mobiltelefons nicht möglich ist, bzw. nicht sinnvoll, wird bei der Konvertierung vom HTML Format zum WML Format diese Möglichkeit nicht berücksichtigt. Ferner werden Verweise auf Bilder, die im HTML Format vorhanden sein könnnen, bei der Konvertierung zu WML ausgelassen.

Unter Umständen können nicht alle Informationen gleichzeitig auf dem Display des Mobiltelefons dargestellt werden, der Nutzer kann sich dann die Nachrichten einzeln anzeigen lassen.

Da dem Nutzer die bis jetzt erhaltenen Informationen nicht ausreichen, da sie in der Regel nur die Fahrtstrecke bis zur Grenze Nordrhein-Westfalens betreffen, wird er entsprechend Fig. 1 zwei weitere Anfragen (Anfrage 2, Anfrage 3) an die Internet Server 4b und 4c schicken und weitere Informationen mit den Antworten 2 und 3 erhalten. Da die Antwortnachrichten redundante bzw. überflüssige Informationen enthalten können, ist der Nutzer gezwungen, diese Verkehrsinformationen zudem noch für seine Zwecke auszuwerten.

Es ist einfach ersichtlich, daß die Zeit T1, zwischen dem Absenden der ersten Anfrage (Anfrage 2, t1) und dem erhalten der letzten Antwort (Antwort 2, t2) einige Minuten vergehen können, wenn man bedenkt, daß alleine das Aufrufen einer Internet-Seite schon mehrere Minuten in Anspruch nehmen kann. Ferner wird ein gewisser Zeitraum von der Datenverarbeitungseinrichtung 2 benötigt, um die Informationen zu empfangen, umzuarbeiten und weiterzuleiten. Einer dieser Zeiträume ist in Fig.1 beispielhaft mit a bezeichnet.

Bei dem Mobiltelefon 1 werden die Informationen vorzugsweise auf dem Display dargestellt. Es ist aber auch denkbar, daß die so empfangenen Informationen von einer Sprachsyntheseeinrichtung, mit der ein im Fahrzeug fest installiertes Mobiltelefon ausgestattet ist, vorgelesen werden.

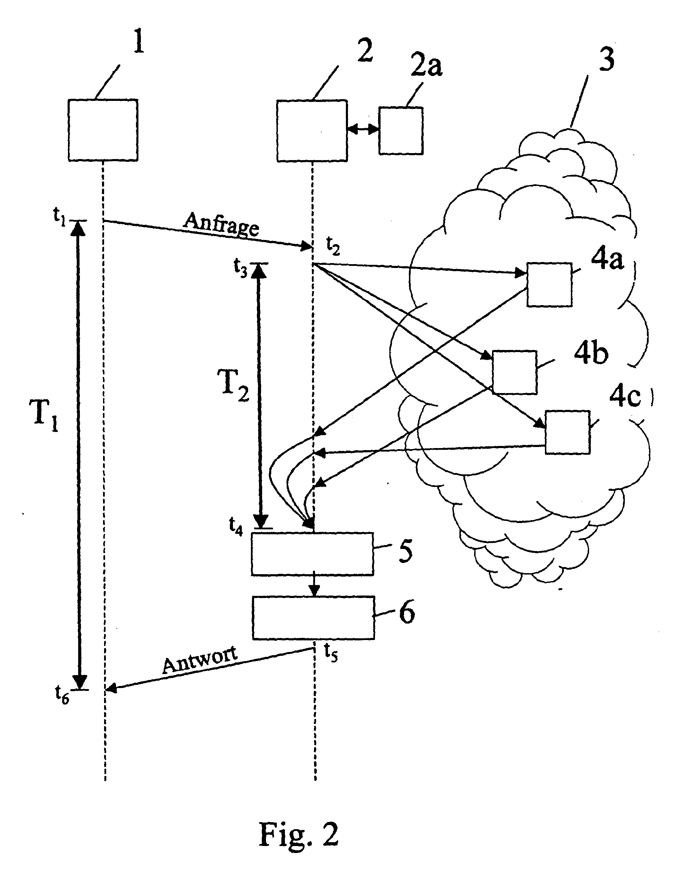

Fig. 2 zeigt den prinzipiellen Ablauf einer Anfrage an ein Informationsnetzwerk 3 gemäß einer ersten Ausführungsform der Erfindung. Bei dieser Ausführungsform wird ein Verfahren zum Abfragen von Informationen aus einem Informationsnetzwerk 2, hier repräsentiert durch das Internet, welches eine Anzahl von Datenquellen enthält, hier dargestellt durch die Internet-Server 4a,4b,4c, die jeweils einen Teil der angefragten Informationen enthalten, bei dem eine Abfrageeinrichtung, hier beispielsweise ein Mobiltelefon 1 eine Anfrage an eine Datenverarbeitungseinrichtung 2 sendet. Das Verfahren ist dadurch gekennzeichnet, daß die Informationen der Datenquellen 4a,4b, 4c des Informationsnetzwerkes 3 von der Datenverarbeitungseinrichtung 2 abgefragt werden, daß die vpn den Datenquellen 4a,4b,4c erhaltenen Informationen von der Datenverarbeitungseinrichtung 2 auf ein einheitliches Format gewandelt werden, redundante Informationen durch die Datenverarbeitungseinrichtung 2 eliminiert werden und die so empfangenen und bearbeiteten Informationen von der Datenverarbeitungseinrichtung 2 an die Abfrageeinrichtung 1 weitergeleitet werden.

Dieses Verfahren, bei dem die Funktionsblöcke zu einem großen Teil den Funktionsblöcken dem Stand der Technik aus Figur 1 entsprechen, läßt sich am besten anhand des Zeitablaufs einer Anfrage dargestellen:

Zum Zeitpunkt t1 schickt der Nutzer seine Anfrage an die Datenverarbeitungseinrichtung 2, welche dort zum Zeitpunkt t2 ankommt, bzw. bearbeitet wird. Die Anfrage könnte beispielsweise lauten "Verkehrsmeldungen Autobahn A2, Fahrtrichung Dortmund-Hannover".

Die Datenverarbeitungseinrichtung 2 erkennt anhand des Wortlautes der Anfrage, bzw. einer eventuell von dem Mobiltelefon 1 mitgeteilten Anfrage-Kategorie, daß Verkehrsinformationen vom Nutzer gewünscht werden.

Beispielsweise anhand von Stadtnamen in der Anfrage kann die Datenverarbeitungseinrichtung 2 erkennen, von welchen Internet-Servern Informationen anzufragen sind und kontaktiert deshalb nur die relevanten Internet-Server 4a,4b,4c.

Die Datenverarbeitungseinrichtung 2 stellt daraufhin zum Zeitpunkt t3 Verbindungen zu den Internet-Server 4a,4b und 4c her. Die URL's werden von der Datenverarbeitungseinrichtung entsprechend so ausgewählt, daß direkt auf die Verkehrsinformationsseiten der Internet-Server 4a,4b,4c zugegriffen wird.

Die Verkehrsinformationsseiten, die in Verbindung mit Fig. 1 schon beschrieben wurden, sind in den Internet Servern 4a,4b,4c im HTML Format verfügbar. Diese HTML Seiten werden von den Internet Servern 4a, 4b und 4c durch die Datenverarbeitungseinrichtung 2 heruntergeladen.

Je nachdem, welche Leitungen zu einem der Internet-Server 4a,4b,4c stark oder weniger stark ausgelastet sind und wie stark die einzelnen Internet-Server 4a,4b,4c von anderen Anfragen belastet sind, sind diese HTML Seiten mit den Verkehrsinformationen mehr oder weniger schnell bei der Datenverarbeitungseinrichtung 2 verfügbar. In diesem Beispiel sind aus diesem Grund die Daten des Internet-Servers 4c schneller verfügbar als die des Internet Servers 4b.

Zum Zeitpunkt t4 sind die Informationen von allen Internet-Servern 4a,4b,4c dann verfügbar. Die Zeitspanne T2 gibt in Fig.2 damit die Zeitspanne an, die benötigt wird, um die Informationen aus dem Internet abzufragen und zu erhalten.

Die Datenverarbeitungseinrichtung 2 wandelt nun nicht die einzelnen HTML-Seiten direkt in WML-Seiten um, sondern bringt die erhaltenen Informationen zunächst in Funktionsblock 5 auf ein einheitliches Format um und speichert sie dann im ASCII Code ab.

Die empfangenen HTML Seiten werden dann erst einmal nach Schlüsselbegriffen durchsucht. Diese Schlüsselbegriffe können beispielsweise Nummern von Autobahnen oder Bundesstraßen (A1,A2,A3, B1, B51, usw), Namen von Ortschaften und Städten (Dortmund, Bochum usw) sein. Die Schlüsselbegriffe wurden zuvor in dem Speicher 2a, der der Datenverarbeitungseinrichtung 2 zugeordnet ist, fest gespeichert.

Die Datenverarbeitungseinrichtung 2 sucht nach dem Auffinden eines Schlüsselbegriffs nach einem Text der Auskunft über die dazugehörigen Verkehrsinformation liefert. Dieser Text steht in der Regel direkt hinter dem Schlüsslbegriff oder ist nur durch einfache HTML-Formatierungszeichen von dem Schlüsselbegriff getrennt.

Aufgrund des verschiedenen Aufbaus der HTML-Seiten der unterschiedlichen Internet-Server 4a,4b,4c ist es möglich, daß für die HTML-Seiten der verschiedenen Server auch unterschiedliche Schlüsselbegriffe zu den Verkehrsinformationen auf den HTML-Seiten führen.

Die Datenverarbeitungseinrichtung 2 kann weiterhin anhand der mit den Schlüsselbegriffen aufgefundenen Verkehrsinformationen feststellen, auf welche Richtungsfahrbahn sich eine Verkehrsmeldung bezieht. Dies wird im vorliegenden Ausführungsbeispiel dadurch erreicht, dass die Verkehrsmeldungen nach den Namen von Autobahnabfahrten bzw. Autobahnkreuzen durchsucht werden. Diese Namen sind für diesen Zweck auch in dem Speicher 2a abgelegt. Zusammen mit diesem Text können auch Positionsinformationen, z.B. geographische Länge und Breite, im abgelegt sein.

In der Regel sind Verkehrsmeldungen für Autobahnen so gestaltet, daß zunächst die Autobahnabfahrt vor einem Stau angegeben wird, und dann die Autobahnabfahrt hinter dem Stau. Sobald diese Art von Textstellen identifiziert wurden kann nun die Datenverarbeitungseinrichtung 2 die Fahrtrichtung auf einer Autobahn identifizieren, zu der eine Verkehrsmeldung gehört. Diese Richtungsinformationen werden dann zusätzlich abgelegt.

Sollte sich beim Abspeichern der Informationen herausstellen, daß gleiche oder ähnliche Verkehrsmeldungen von verschiedenen Internet Servern (4a,4b,4c) erhalten wurden, kann die Datenverarbeitungseinrichtung 2 die Meldungen, bis auf eine, verwerfen. Die zu verwerfenden Meldungen sind vorzugsweise die, die früher von einem Internet-Server (4a,4b,4c) angekommen sind. Evtl. ist auch aus den HTML-Seiten erkennbar, wann diese Seiten zuletzt aktualisiert wurden, die Datenverarbeitungseinrichtung 2 wird dann die Informationen von der früher aktualisierten HTML-Seite verwerfen, d.h. redundante Informationen werden eliminiert.

Alle identifizierten Verkehrsmeldungen, werden auf eine für alle Verkehrsmeldungen einheitliches Format gebracht und abgespeichert.

Der Datensatz einer in diesem Format abgespeicherten Verkehrsmeldung könnte folgendermaßen aussehen:
Zeit = 1999-07-07-11.34
Nachricht Start
Typ = "A"
Nummer: "2"
Text= "Dortmund Richtung Oberhausen zwischen Kreuz Recklinghausen und Essen/Gladbeck, Bergungsarbeiten, 8 km"
Position = "12, 34öL-34,56nB 56,78öL-78,90nB
Richtung = "1"
Nachricht Ende

Hierbei gibt die Zeile "Zeit", die Zeit an, zu der die Verkehrsinformation empfangen wurde. "Typ" gibt Auskunft über den Straßentyp, auf den sich die Meldung bezieht (A=Autobahn, B=Bundesstraße usw). "Nummer" identifiziert die Nummer des Straßentyps. "Text" gibt den Text der eigentlichen Verkehrsmeldung wieder. "Richtung" identifiziert die Fahrtrichtung auf die sich die Verkehrsmeldung bezieht. "Position" gibt die geographischen Positionen der Autobahnabfahrten bzw. Kreuze wieder, zwischen denen diese Verkehrsmeldung relevant ist. Die Richtung gibt an, in welcher Reihenfolge die geographischen Positionen abzulesen sind, um die Fahrtrichtung eines Staus zu identifizieren d.h. eine 1 steht für die Hinrichtung, eine -1 für die Gegenrichtung und eine 0 für beide Richtungen.

Alle Schritte, vom Formatieren der von den Internet-Servern 4a,4b,4c erhaltenen HTML-Seiten bis zum Abspeichern der formatierten Informationen werden in Fig. 2 im Funktionsblock 5 ausgeführt.

Sobald die Informationen von allen Internet Servern 4a,4b,4c vorliegen, verarbeitet und gespeichert sind, vergleicht die Datenverarbeitungseinrichtung 2 die so erhaltenen Informationen mit der Anfrage von der Abfrageeinrichtung 1. In diesem Fall lautete die Abfrage: "Verkehrsmeldungen Autobahn A2, Fahrtrichung Dortmund-Hannover".

Aus dieser Anfrage kann die Datenverarbeitungseinrichtung 2 die Nummer der Autobahn extrahieren und aufgrund der Stadtnamen in Zusammenhang mit den in Speicher 2a abgelegten Positionsinformationen die benötigte Fahrtrichtung feststellen.

Ferner geben die zu den Stadtnamen gehörigen Positionsinformationen Auskunft darüber, welcher Streckenabschnitt abgefragt wird.

Die Datenverarbeitungseinrichtung 2 durchsucht im Funktionsblock 6 nun die von den Internet Servern 4a,4b,4c erhaltenen und in Block 5 formatierten Informationen und stellt dabei fest, welche Informationen für den Nutzer relevant sind und stellt diese Informationen zusammen. Sobald dieser Vorgang abgeschlossen ist, wird zum Zeitpunkt t5 eine Antwortnachricht an das Mobiltelefon 1 abgeschickt, die zum Zeitpunkt t6 dort eingeht. Die Antwort kann genauso wie die Anfrage in einer SMS oder auf irgendeine andere Weise verschickt werden.

Die erhaltenen Information kann der Nutzer sich nun bequem auf der Anzeigeeinrichtung des Mobiltelefons ansehen oder sich beispielsweise von der Sprachsyntheseeinrichtung eines fest in einem Fahrzeug installierten Mobiltelefons vorlesen lassen.

Der Nutzer erhält nach dem Verfahren, wie es anhand der Figur 2 beschrieben wurde, nur für Ihn wirklich relevante Informationen, er braucht keine Zeit und Mühe mehr darauf verwenden, die erhaltenen Verkehrsmeldungen selbst nach den für ihn relevanten Informationen zu durchsuchen.

Auch wenn dieses gegenüber dem Stand der Technik schon sehr komfortable Verfahren für den Nutzer eine sehr gute Verbesserung bedeutet, kann die Zeit T1, zwischen dem Absenden der Anfrage und dem Empfangen der Antwort, die benötigt wird, um die Informationen von den Internet-Servern 4a,4b,4c zu erhalten und auszuwerten, noch relativ lang sein.

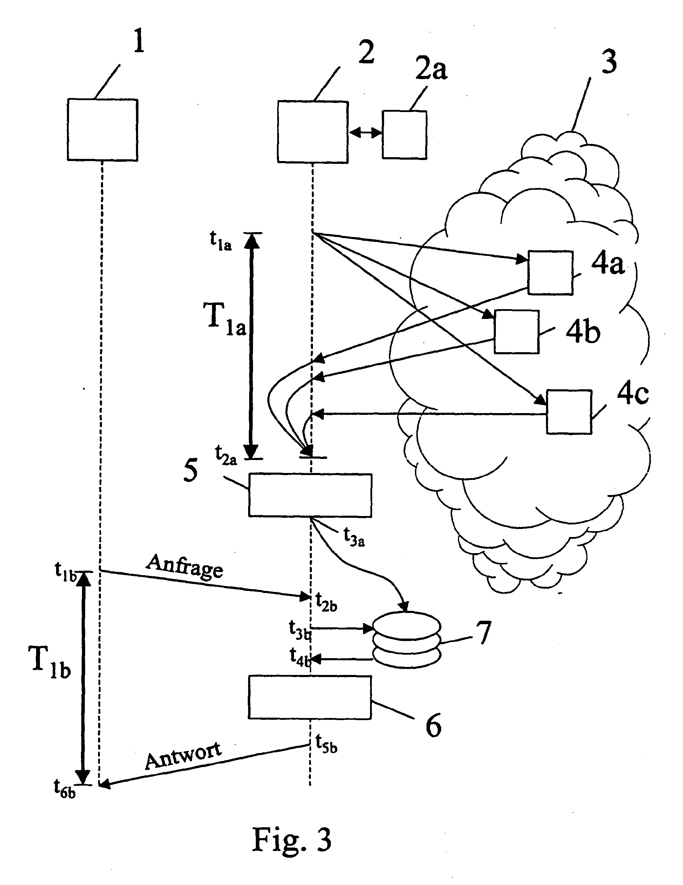

In Fig. 3 wird nun eine weitere Ausführungsform der Erfindung dargestellt, mit der die Zeit vom Absenden einer Anfrage bis zum Empfangen der Antwort noch deutlich reduziert werden kann.

Prinzipiell unterscheidet sich die Ausführungsform der Erfindung, wie sie in Figur 3 dargestellt ist, von der Ausführungsform entsprechend Figur 2 dadurch, daß die Abfrage der Datenverarbeitungseinrichtung 2 der Internet-Server 4a,4b,4c unabhängig davon ist, ob eine Anfrage von einem Mobiltelefon 1 eingegangen ist.

Dies Verfahren wird im folgenden anhand des Zeitablaufs nach Fig. 3 erläutert.

Zum Zeitpunkt t1a stellt die Datenverarbeitungseinrichtung 2 Verbindungen zu den Internet-Servern 4a,4b,4c her, die in diesem zweiten Ausführungsbeispiel z.B. alle in Deutschland verfügbaren Internet Server repräsentieren, die Verkehrsinformationen enthalten.

Zum Zeitpunkt t2a sind die HTML-Seiten der verschiedenen Internet-Server 4a,4b,4c verfügbar. Der Zeitraum vom Abfragen der Internet-Server bis zum Erhalten aller Informationen ist in Fig.3 mit T1a gekennzeichnet.

Danach formatiert die Datenverarbeitungseinrichtung 2 die in den HTML-Seiten gefunden Informationen im Funktionsblock 5 genauso wie, dies im Zusammenhang mit Fig.2 bereits beschrieben wurde. Zum Zeitpunkt t3a ist dieser Vorgang abgeschlossen und die aufbereiteten Informationen werden auf der Zwischenspeichereinrichtung 7 abgespeichert. Die einzelnen abgespeicherten Datensätze entsprechen denen im Zusammenhang mit Fig. 2 erläuterten Datensätzen.

Den gesamten Vorgang des Kontaktierens der Internet-Server 4a,4b,4c und des Aufbereitens der Informationen führt die Datenverarbeitungseinrichtung 2 bevorzugt in regelmäßigen Abständen durch. Dies kann z.B. alle 10 Minuten erfolgen. Natürlich ist es auch möglich, daß die Datenverarbeitungsanlage 2 den Vorgang von neuem startet sobald der vorherige Vorgang abgeschlossen ist.

Bei weniger schnelllebigen Informationen, wie z.B. Produktinformationen von verschiedenen Unternehmen, ist u.U. auch eine tägliche oder wöchentliche Abfrage der entsprechenden Internet Server ausreichend.

Die Datenverarbeitungseinrichtung 2, die in dem Ausführungsbeispiel nach Fig.3 immer alle verfügbaren Internet-Server 4a,4b,4c kontaktiert, die Verkehrsmeldungen anbieten, überprüft bei jedem Abspeichern der aufbereiteten Informationen auf der Zwischenspeichereinrichtung, ob Informationen, die im vorherigen Vorgang ermittelten wurden, auch bei dem darauffolgenden Vorgang ermittelt wurden. Ist dies nicht der Fall, d.h., dass sich beispielsweise ein Stau auf einer Autobahn aufgelöst hat, wird diese nicht mehr aktuelle Nachricht von der Zwischenspeichereinrichtung 7 gelöscht.

Es wäre natürlich auch denkbar, daß nach jedem Abfragevorgang alle alten Verkehrsinformationen von der Zwischenspeichereinrichtung 7 gelöscht werden und die neuen Verkehrsinformationen abgespeichert werden. Sollten jedoch einzelne Internet-Server 4a,4b,4c bei einem Abfragevorgang nicht erreichbar sein, wären die daraus resultierenden abgespeicherten Verkehrsinformationen lückenhaft.

In Figur 3 startet nun der Nutzer mit seinem Mobiltelefon 1 zum Zeitpunkt t1b eine Anfrage an die Datenverarbeitungseinrichtung 2, die dort zum Zeitpunkt t2b eingeht.

Die Datenverarbeitungseinrichtung 2 nimmt die Anfrage an und wertet sie zunächst aus, d.h. sie stellt fest, daß beispielsweise Verkehrsinformationen angefragt wurden. Zum Zeitpunkt t3b wird die ausgewertete Anfrage an die Zwischenspeichereinrichtung 7 weitergeleitet, die nun alle verfügbaren aktuellen Verkehrsinformationen an die Datenverarbeitungseinrichtung ausgibt. In dem Funktionsblock 6 werden nun die für den Nutzer relevanten Informationen ausgefiltert, wie dies im Zusammenhang mit Figur 2 bereits erläutert wurde.

Zum Zeitpunkt t5b werden die gefilterten Verkehrsinformationen and das Mobiltelefon 1 in Form einer Antwortnachricht weitergegeben, die dort zum Zeitpunkt t6b eingeht und vom Nutzer verwendet werden kann. Der Zeitraum T1b stellt die Zeit dar, die zwischen dem Absenden der Anfrage und dem Empfangen der Antwort liegt.

Der Zeitraum T1b ist bei einer schnell arbeitenden Datenverarbeitungsanlage so kurz, daß die Verbindung zwischen dem Mobiltelefon 1 und der Datenverarbeitungseinrichtung während des gesamten Zeitraums T1b aufrecht erhalten werden kann, so dass auch keine Zeit für einen zweiten Verbindungsaufbau zum Senden der Antwortnachricht aufgewendet werden muss.

Anhand der Darstellung in Fig. 3 ist einfach ersichtlich, dass das eigentliche Aufsuchen der Informationen im Internet 3 für den Nutzer keinen zeitlichen Nachteil erbringt. Wenn man voraussetzt, daß die Intervalle kurz genug sind, mit denen die Datenverarbeitungseinrichtung die Internet-Server 4a,4b,4c abfragt, um ständig die aktuellsten Nachrichten in der Zwischenspeichereinrichtung vorrätig zu haben, leidet auch die Aktualität der Informationen nicht.

Es sei noch darauf hingewiesen, daß das Mobiltelefon 1 mit einer Positionsbestimmungseinrichtung ausgestattet sein kann, z.B. einem GPS Empfänger, und diese Positionsinformation mit der Anfrage an die Datenverarbeitungseinrichtung 2 weitergibt. Hierdurch kann sich beispielsweise die Angabe eines Startpunktes erübrigen.

Ferner kann sich die Anfrage nicht nur auf eine bestimmte Strecke beziehen, sondern es ist auch möglich, z.B. einen kreisförmigen Bereich um die gegenwärtige Position der Abfrageeinrichtung abzufragen.

Weiterhin wäre es denkbar, daß die Abfrageeinrichtung zunächst eine Anfrage nach einer Routenzusammenstellung an einen Diensteanbieter schickt und die Datenverarbeitungseinrichtung 2 dann anhand der zusammengestellten Fahrtroute die entsprechenden Verkehrsinformationen zur Verfügung stellt. Sollte sich hierbei anhand der Verkehrsmeldungen herausstellen, daß die zunächst erstellte Fahrtroute ungünstig ist, kann in einem weiteren Schritt bei dem Diensteanbieter eine neue Route berechnet werden. Gehören die Datenverarbeitungseinrichtung 2 zum zusammenstellen von Verkehrsinformationen und der Diensteanbieter zur Routenermittlung zusammen, kann eine noch engere Zusammenarbeit erfolgen, mit der die optimale Route für den Nutzer erstellt werden kann.

## Patentansprüche

1. Verfahren zum Abfragen von Informationen, insbesondere Verkehrsmeldungen, aus einem Informationsnetzwerk (3), das eine Anzahl von Datenquellen (4a, 4b, 4c) enthält, wobei die Datenquellen jeweils einen Teil der angefragten Informationen enthalten, mit folgenden Schritten:
- Senden einer Anfrage von einer Abfrageeinrichtung (1) an eine Datenverarbeitungseinrichtung (2),
- Abfragen der Informationen, insbesondere Verkehrsmeldungen, der Datenquellen (4a, 4b, 4c) im Informationsnetzwerk (3) durch die Datenverarbeitungseinrichtung (2),
- Umwandeln der von den Datenquellen erhaltenen Informationen, insbesondere Verkehrsmeldungen, in ein für alle Informationen einheitliches Format durch die Datenverarbeitungseinrichtung (2), und Weiterleiten der in ein einheitliches Format umgewandelten Informationen von der Datenverarbeitungseinrichtung (2) an die Abfrageeinrichtung (1).

2. Verfahren nach Anspruch 1, **dadurch gekennzeichnet, dass** die Datenverarbeitungseinrichtung (2) die Informationen der Datenquellen (4a, 4b, 4c) nach Schlüsselbegriffen durchsucht und die dazu gehörigen Informationen ausliest.

3. Verfahren nach Anspruch 1 oder 2, **dadurch gekennzeichnet, dass** die Datenverarbeitungseinrichtung (2) die von den Datenquellen (4a, 4b, 4c) erhaltenen Informationen nach redundanten Informationen durchsucht und diese redundanten Informationen vor der weiteren Verarbeitung eliminiert.

4. Verfahren nach einem der vorstehenden Ansprüche, **dadurch gekennzeichnet, dass** die Datenverarbeitungseinrichtung (2) die in den Datenquellen (4a, 4b, 4c) aufgefundenen Informationen entsprechend der Anfrage der Abfrageeinrichtung (1) filtert bevor die Informationen an die Abfrageeinrichtung (1) weitergeleitet werden.

5. Verfahren nach einem der vorstehenden Ansprüche, **dadurch gekennzeichnet, dass** die Datenverarbeitungseinrichtung (2) die Datenquellen (4a, 4b, 4c) in regelmäßigen Abständen nach relevanten Informationen durchsucht und die gefundenen Informationen in einer Zwischenspeichereinrichtung (7) abspeichert.

6. Verfahren nach Anspruch 5, **dadurch gekennzeichnet, dass** die Informationen, die beim Durchsuchen der Datenquellen (4a, 4b, 4c) von der Datenverarbeitungseinrichtung (2) zwischengespeichert wurden, aber in den Datenquellen (4a, 4b, 4c) beim nächsten Suchvorgang nicht mehr vorhanden sind, aus der Zwischenspeichereinrichtung (7) gelöscht werden.

7. Verfahren nach einem der vorstehenden Ansprüche, **dadurch gekennzeichnet, dass** das Informationsnetzwerk (3) das Internet ist und die Datenquellen im Internet Informationen anbietende Internetserver (4a, 4b) sind.

8. Verfahren nach einem der vorstehenden Ansprüche, **dadurch gekennzeichnet, dass** die Abfrageeinrichtung (1) eine mobile Kommunikationseinrichtung ist.

9. Verfahren nach einem der vorstehenden Ansprüche, **dadurch gekennzeichnet, dass** die Abfrageeinrichtung mittels eines Wireless Application Protocoll (WAP) mit der Datenverarbeitungseinrichtung (2) kommuniziert.

10. Verfahren nach einem der vorstehenden Ansprüche, **dadurch gekennzeichnet, dass** die abzurufenden Informationen Verkehrsmeldungen sind.

11. Datenverarbeitungseinrichtung (2) zum Durchsuchen von Datenquellen (4a, 4b, 4c) in einem Informationsnetzwerk (3), die Informationen, insbesondere Verkehrsmeldungen, zur Verfügung stellen, wobei die Datenverarbeitungseinrichtung (2) die in den Datenquellen (4a, 4b, 4c) des Informationsnetzwerkes (3) aufgefundenen Informationen in ein für all Informationen einheitliches Format umwandelt, die in ein einheitliches Format umgewandelten Informationen in einer Zwischenspeichereinrichtung (7) abspeichert und auf Anfrage von einer Abfrageeinrichtung (1) die Informationen an die Abfrageeinrichtung (1) weiterleitet.

12. Datenverarbeitungseinrichtung nach Anspruch 11, **dadurch gekennzeichnet, dass** die Datenverarbeitungseinrichtung (2) die Datenquellen (4a, 4b, 4c) in regelmäßigen Abständen durchsucht.

13. Datenverarbeitungseinrichtung nach Anspruch 11 oder 12, **dadurch gekennzeichnet, dass** sie Informationen aus der Zwischenspeichereinrichtung (7) löscht, die bei erneutem Durchsuchen der Datenquellen (4a, 4b, 4c) nicht mehr aufgefunden werden.

14. Datenverarbeitungseinrichtung nach einem der Ansprüche 11 bis 13, **dadurch gekennzeichnet, dass** sie die von den Datenquellen (4a, 4b, 4c) enthaltenden Informationen nach Schlüsselbegriffen durchsucht und die zu den Schlüsselbegriffen gehörigen Informationen nach der Umwandlung in ein für alle Informationen einheitliches Format als relevante Informationen in der Zwischenspeichereinrichtung(7) abspeichert.

15. Datenverarbeitungseinrichtung nach einem der Ansprüche 11 bis 14, **dadurch gekennzeichnet, dass** sie die Zwischenspeichereinrichtung (7) abgespeicherten Informationen vor der Weiterleitung an eine Abfrageeinrichtung (1) entsprechend einer Anfrage von der Abfrageeinrichtung (1) filtert.

## Claims

1. A method for retrieving information, in particular traffic messages, from an information network (3) containing a number of data sources (4a, 4b, 4c), whereby the data sources in each case contain a part of the requested information, comprising the following steps:
- sending an enquiry from an enquiry device (1) to a data processing device (2),
- retrieving information, in particular traffic messages, of the data sources (4a, 4b, 4c) in the information network (3) by the data processing device (2),
- converting the information obtained from the data sources, in particular traffic messages, into a format uniform for all information by the data processing device (2), and relaying the information converted into a uniform format from the data processing device (2) to the enquiry device (1).

2. A method according to Claim 1,
**characterised in that** the data processing device (2) browses the information of the data sources (4a, 4b, 4c) for key terms and reads out the information appertaining thereto.

3. A method according to Claim 1 or 2,
**characterised in that** the data processing device (2) browses the information obtained from the data sources (4a, 4b, 4c) for redundant information and eliminates this redundant information before further processing.

4. A method according to one of the preceding Claims,
**characterised in that** the data processing device (2) filters the information found in the data sources (4a, 4b, 4c) according to the enquiry of the enquiry device (1) before the information is relayed to the enquiry device (1).

5. A method according to one of the preceding Claims,
**characterised in that** the data processing device (2) browses the data sources (4a, 4b, 4c) for relevant information at regular intervals and stores the found information in an intermediate storage device (7).

6. A method according to Claim 5,
**characterised in that** the information which was temporarily stored when the data processing device (2) browsed the data sources (4a, 4b, 4c), but is no longer available in the data sources (4a, 4b, 4c) during the next browsing operation, is deleted from the intermediate storage device (7).

7. A method according to one of the preceding Claims,
**characterised in that** the information network (3) is the Internet and the data sources are Internet servers (4a, 4b) that offer information in the Internet.

8. A method according to one of the preceding Claims,
**characterised in that** the enquiry device (1) is a mobile communications device.

9. A method according to one of the preceding Clams
**characterised in that** the enquiry device communicates with the data processing device (2) by means of a Wireless Application Protocol (WAP).

10. A method according to one of the preceding Claims,
**characterised in that** the information to be retrieved is traffic messages.

11. A data processing device (2) for browsing data sources (4a, 4b, 4c) in an information network (3), which make available information, in particular traffic messages, wherein the data processing device (2) converts the information found in the data sources (4a, 4b, 4c) of the information network (3) into a format that is uniform for all information, stores the information converted into a uniform format in an intermediate storage device (7) and in response to an enquiry from an enquiry device (1) relays the information to the enquiry device (1).

12. A data processing device according to Claim 11,
**characterised in that** the data processing device (2) browses the data sources (4a, 4b, 4c) at regular intervals.

13. A data processing device according to Claim 11 or 12,
**characterised in that** it deletes information from the intermediate storage device (7) which is no longer found when browsing the data sources (4a, 4b, 4c) again.

14. A data processing device according to one of Claims 11 to 13,
**characterised in that** it browses the information contained by the data sources (4a, 4b, 4c) for key terms and stores the information belonging to the key terms in the intermediate storage device (7) as relevant information after converting it into a format uniform for all information.

15. A data processing device according to one of Claims 11 to 14,
**characterised in that** it filters information stored in the intermediate storage device (7) prior to relaying it to an enquiry device (1) according to an enquiry from the enquiry device (1).

## Revendications

1. Procédé de demande d'informations, en particulier, d'informations de trafic, depuis un réseau d'information (3), contenant une pluralité de sources de données (4a, 4b, 4c), les sources de données contenant chacune une partie des informations demandées, comprenant les étapes suivantes :
- envoi d'une requête, d'un dispositif d'interrogation (1) à un dispositif de traitement de données (2),
- demande d'informations, en particulier d'informations de circulation, auprès des sources de données (4a, 4b, 4c) dans le réseau d'information (3), au moyen du dispositif de traitement de données (2),
- conversion des informations reçues des sources de données, en particulier des informations de circulation, en un format unitaire pour toutes les informations, au moyen du dispositif de traitement de données (2), et retransmission des informations converties en un format unitaire, du dispositif de traitement de données (2) au dispositif d'interrogation (1).

2. Procédé selon la revendication 1, **caractérisé en ce que** le dispositif de traitement de données (2) recherche les informations des sources de données (4a, 4b, 4c) d'après des concepts de clé et lit les informations leurs étant afférentes.

3. Procédé selon la revendication 1 ou 2, **caractérisé en ce que** le dispositif de traitement de données (2) recherche dans les informations reçues des sources de données (4a, 4b, 4c), pour trouver des informations redondantes, et élimine ces informations redondantes avant de continuer le traitement.

4. Procédé selon l'une des revendications précédentes, **caractérisé en ce que** le dispositif de traitement de données (2) filtre les informations trouvées dans les sources de données (4a, 4b, 4c), de manière correspondante à la requête du dispositif d'interrogation (1), avant que les informations soient retransmises au dispositif d'interrogation (1).

5. Procédé selon l'une des revendications précédentes, **caractérisé en ce que** le dispositif de traitement de données (2) recherche dans les sources de données (4a, 4b, 4c), à intervalles réguliers, des informations présentant une importance, et stocke les informations liées en un dispositif de stockage intermédiaire (7).

6. Procédé selon la revendication 5, **caractérisé en ce que** les informations qui, lors de la recherche dans les sources de données (4a, 4b, 4c), ont été mises en stockage intermédiaire par le dispositif de traitement de données (2), mais n'existent plus dans les sources de données (4a, 4b, 4c) lors du processus de recherche immédiatement subséquent, sont effacées du dispositif de stockage intermédiaire (7).

7. Procédé selon l'une des revendications précédentes, **caractérisé en ce que** le réseau d'information (3) est l'Internet et les sources de données sont des serveurs Internet (4a, 4b), offrant des informations dans Internet

8. Procédé selon l'une des revendications précédentes, **caractérisé en ce que** le dispositif d'interrogation (1) est un dispositif de communication mobile.

9. Procédé selon l'une des revendications précédentes, **caractérisé en ce que** le dispositif d'interrogation communique avec le dispositif de traitement de données (2) au moyen d'un Protocole d'Application Sans Fil (WAP).

10. Procédé selon l'une des revendications précédentes, **caractérisé en ce que** les informations demandées sont des informations de circulation.

11. Dispositif de traitement de données (2) pour la recherche dans des sources de données (4a, 4b, 4c) dans un réseau d'information (3), qui mettent à disposition des informations, en particulier des informations de circulation, le dispositif de traitement de données (2) convertissant les informations, trouvées dans les sources de données (4a, 4b, 4c) du réseau d'information (3), en un format unitaire pour toutes les informations, mettant en mémoire, dans un dispositif de stockage intermédiaire (7), les informations converties en un format unitaire et retransmettant, à la demande émanant d'un dispositif d'interrogation (1), les informations au dispositif d'interrogation (1).

12. Dispositif de traitement de données selon la revendication 11, **caractérisé en ce que** le dispositif de traitement de données (2) recherche dans les sources de données (4a, 4b, 4c) à intervalles réguliers.

13. Dispositif de traitement de données selon la revendication 11 ou 12, **caractérisé en ce qu'**il efface du dispositif de stockage intermédiaire (7) des informations qui ne se trouvent plus dans les sources de données (4a, 4b, 4c) lorsqu'on renouvelle une recherche en elles.

14. Dispositif de traitement de données selon l'une des revendications 11 à 13, **caractérisé en ce qu'**il recherche les informations contenues dans les sources de données (4a, 4b, 4c), selon des concepts clé, et stocke en mémoire, dans le dispositif de stockage intermédiaire (7), les informations appartenant aux concepts clé, après conversion en un format unitaire pour toutes les informations, comme étant des informations présentant une importance.

15. Dispositif de traitement de données selon l'une des revendications 11 à 14, **caractérisé en ce qu'**il filtre les informations stockées en mémoire dans le dispositif de stockage intermédiaire (7) avant la retransmission à un dispositif d'interrogation (1), ceci de manière correspondant à une interrogation émanant du dispositif d'interrogation (1).
